# EUROPEAN PATENT APPLICATION

(11) **EP 4 368 385 A1**
(43) Date of publication of application: **15.05.2024**
(21) Application number: 23173895.6
(22) Date of filing: 17.05.2023
(51) Int. Cl.: B32B 15/01, C23C 4/123, C23C 4/18, C23C 4/08, C23C 4/137

(54) **BIMETALLIC COMPOSITE MATERIAL BILLET AND PREPARATION METHOD THEREOF**

(30) Priority: 08.11.2022 CN 202211392276
(71) Applicant: Foshan Fenghe PSF Technology Limited, Foshan City, Guangdong Province 528222 (CN)
(72) Inventor: YANG, Yunfeng, Foshan, Guangdong, 528222 (CN); YANG, Furong, Foshan, Guangdong, 528222 (CN)
(74) Representative: Bjerkén Hynell KB

(57) **Abstract**

The present invention discloses a bimetallic composite material and a preparation method thereof. The bimetals include a base metal and a spray-deposited metal, and a melting point of the spray-deposited metal is 1.1-2.0 times a melting point of the base metal. The preparation method comprises the following steps: the spray-deposited metal is melted to obtain a molten liquid; the molten liquid is atomized and spray-deposited onto a surface of the base metal under inert gas protection to obtain a composite metal billet; and the composite metal billet is rolled or stamped to obtain the bimetallic composite. In the present invention, the superheat of the molten metal of spraydeposition with a higher melting point and thermal energy brought by the latent heat of crystallization, and the impact kinetic energy from the atomized jet jointly act on the base metal to achieve the metallurgical bonding of two metals.

## Description

### TECHNICAL FIELD

The present invention belongs to the technical field of metal composite processing, and specifically relates to a bimetallic composite material and a preparation method thereof.

### BACKGROUND

At present, the preparation method of bimetallic composite mainly includes rolling composite method, welding composite method, as well as casting and rolling composite method. Among them: the rolling composite method is to combine two metals into one by roller deformation under certain pressure and temperature. The rolling composite method can be further divided into cold rolling composite method and hot rolling composite method. Compared with the cold rolling composite method, the hot rolling composite method has less rolling force, and low requirements for the rolling mill, with simple process, low cost and firm interface bonding. However, the length of the composite metal plate will be limited without insulation measures during rolling; it is difficult to control the thickness of the composite plate, with poor production consistency and stability.

The most commonly used welding composite method is the explosion welding composite method, which has a simple process and good bonding strength. However, the mechanization degree of this process is low, with serious environmental pollution and a certain degree of danger. Moreover, it has the defects of poor surface quality, failure to produce thin plate (≤ 6 mm), etc. At the same time, the bimetallic bonding interface has a high resistivity, and the conductive plate has a large calorific value, short life and high energy consumption.

The molten metal is cast onto the preheated metal substrate during composite casting and rolling, and the molten metal with the substrate enters the rolling mill to complete the heat exchange, thus forming the composite billet. The molten mass undergoes the two processes of solidification and hot rolling between the rolls, which combines the casting method and the rolling method in a unified manner. The process is optimized by eliminating the pressing of the metal substrate for metal ingot melting. However, the metal substrate needs to be preheated, which also has the defects of complicated process and high cost.

For the compounding of two metallic materials with widely different physical and chemical properties (e.g., chemical properties, melting points, specific gravity, etc.), the above-mentioned preparation methods are mainly used, and the spray deposition method is also used. However, the existing method of preparing bimetals by spray deposition requires preheating the base metal subject to spray deposition to a temperature that is 60-90% of its melting point. Therefore, the same technical problems of high cost and low efficiency also exist.

### SUMMARY

The present invention aims to solve at least one of the technical problems in the existing technologies above-mentioned. For this reason, the present invention proposes a bimetallic composite material and a preparation method thereof, that is, using the superheat of the molten liquid jet of the spray-deposited metal with a higher melting point, the thermal energy brought by the latent heat of crystallization, and the impact kinetic energy from injection of the molten liquid after atomization to act on the base metal with a lower melting point, thus achieving metallurgical bonding of bimetals. There is no need to preheat the base metal, which greatly simplifies the production process, reduces the production cost, and increases production efficiency.

To overcome the above technical problems, the first aspect of the present invention provides a method for preparing a bimetallic composite material.

Specifically, a method for preparing a bimetallic composite material comprising a base metal and a spray-deposited metal, wherein said spray-deposited metal has a melting point 1.1-2.0 times a melting point of said base metal, and said method comprises the following steps:
(1) Metal melting: melting said spray-deposited metal to obtain a molten liquid;
(2) Spray deposition: atomizing said molten liquid and then spray-depositing onto a surface of said base metal under inert gas protection to obtain a composite metal billet;
(3) Pressure processing: rolling or stamping said composite metal billet to obtain said bimetallic composite material.

The bimetallic composite material of the present invention is compounded by two metals with widely different physical and chemical properties, mainly in the sense that the melting point of the spray-deposited metal is higher than that of the base metal, i.e., the melting point of the spray-deposited metal is 1.1-2.0 times the melting point of the base metal. During the preparation, the spray-deposited metal with a high melting point is melted; then the molten metal is deoxygenated and led into the spray atomization system, so that the molten liquid is atomized and spray-deposited onto the surface of the base metal with a low melting point at a certain atomized jet speed. The superheat of the molten metal of the spray-deposited metal with a higher melting point, the thermal energy brought by the latent heat of crystallization, and the impact kinetic energy from the atomized jet jointly act on the base metal to achieve the metallurgical bonding of two metals. There is no need to preheat the base metal, which not only simplifies the process, but also reduces energy consumption and costs; finally, the metal billet after spray deposition is rolled or stamped to enhance the density and smoothness of the bimetallic composite material.

At the same time, if the melting point of the spray-deposited metal is too low relative to the base metal (e.g., the melting point of the spray-deposited metal is lower than 1.1 times the melting point of the base metal), the superheat of the molten liquid of the spray-deposited metal, the thermal energy brought by the latent heat of crystallization and the impact kinetic energy of the atomized jet are low, and metallurgical bonding of two metals cannot be achieved; if the melting point of the spray-deposited metal is too high relative to the base metal (e.g., the melting point of the spray-deposited metal is higher than 2.0 times the melting point of the base metal), the superheat of the molten liquid of the spray-deposited metal, the thermal energy brought by the latent heat of crystallization and the impact kinetic energy of the atomized jet are high, the base metal is easily broken down, and the bimetallic composite material cannot be obtained. In addition, the melting point difference between the spray-deposited metal and the base metal is also related to the thickness of the base metal. The thinner the base metal, the smaller the melting point difference of the bimetals to be metallurgically bonded.

Preferably, the melting point of said spray-deposited metal is 1.2-2.0 times the melting point of said base metal; more preferably, the melting point of said spray-deposited metal is 1.2-1.5 times the melting point of said base metal.

As a further improvement of the above solution, in Step (2), an atomized jet velocity of said molten liquid is 20-300 m/s, and a certain atomized jet velocity will give the atomized spray-deposited metal with a certain impact kinetic energy.

Preferably, said atomized jet velocity is 200-300 m/s.

As a further improvement of the above solution, said spray-deposited metal is any one selected from the group consisting of steel, cast iron, titanium and its alloys, and copper and its alloys; said base metal is any one selected from the group consisting of alloy steel, cast iron, copper and its alloys, aluminum and its alloys, lead and tin alloys.

Specifically, the melting point of some spray-deposited metal is very high relative to the base metal. For example, steel with a high melting point (melting point of 1500°C) and copper with a low melting point (melting point of 1083.4°C), copper with a high melting point and aluminum with a low melting point (melting point of 660°C), titanium with a high melting point (melting point of 1668°C) and copper with a low melting point, steel with a high melting point and aluminum with a low melting point, their alloy combinations, etc. The high melting point and low melting point referred to in the present invention are relative values, and it is generally necessary to ensure that the melting point of the spray-deposited metal is 1.1-2.0 times the melting point of the base metal. Preferably, said copper alloy is any one selected from the group consisting of tin bronze, chromium-zirconium copper, aluminum bronze and copper-manganese-nickel alloy.

Specifically, the choice of copper or copper alloy is mainly determined by the performance of the metal composite material. If the copper layer needs to have a high electrical conductivity, pure copper can be used, while chromium-zirconium copper has high strength and wear resistance under the premise of maintaining a good electrical conductivity, such as high-speed rail grid wire. Spray deposition is also an excellent process for the preparation of high tin bronze: the tin content of tin bronze produced using the casting process is hardly greater than 8%, while the tin content of high tin bronze formed by spray can be up to 16%, with good cold extrusion or drawing capabilities. In terms of applications, the ITER (International Thermonuclear Fusion) nuclear fusion power plant is used as a carrier for tin to react with Nb to produce the superconducting phase Nb₃Sn. Other high-end copper alloy options include that the spray-formed copper-manganese-nickel alloy is used as structural material for drill pipes. Its mechanical properties (Rₘ 1000 MPa or more) are comparable to those of high-strength steel, titanium alloy or copper-beryllium alloy. As the alloy is non-magnetic, it can be used for rods containing sensors and electronic components for orientation; in addition to yield strength close to 1000 MPa, the spray-formed aluminum bronze also has excellent weldability and machinability, and has been widely used to make bending tools, deep-drawing tools, and injection mold parts.

Preferably, said aluminum alloy is a 6-series aluminum alloy or a 7-series aluminum alloy; further preferably, said 6-series aluminum alloy is 6063 aluminum alloy, and said 7-series aluminum alloy is 7055 aluminum alloy.

Specifically, the choice of aluminum or aluminum alloy is also mainly determined by the properties of the metal composite material. For example, 6063 aluminum alloy has good electrical conductivity, thermal conductivity, strength and corrosion resistance; 7055 aluminum alloy has tensile and yield strength of about 700 MPa, and the composite structure material formed with chromium-zirconium copper can be used in the occasion with high-strength electrical conductivity. For example, the high-speed rail wire can be made into chromium-zirconium copper clad on the spray-formed 7055 core rod, which is then rolled into the bimetallic high-speed rail wire, thus achieving significant weight reduction and cost reduction.

As a further improvement of the above solution, in Step (2), a distance of said spray is 300-1000mm.

Specifically, a certain spray distance can ensure that the atomized jet of the molten metal to be spray-deposited has the best impact kinetic energy, so as to facilitate the metallurgical bonding of two metals.

As a further improvement of the above solution, in Step (2), said inert gas is nitrogen or argon, said atomization is conducted at a pressure of 3-10 atm (303.98 - 1013.25 kPa), and a temperature of an atomized jet deposition surface of said molten metal is 100-600°C superheated relative to the melting point of said base metal. The spray deposition process conditions of the molten metal are mainly set based on the differences between the spray-deposited metal composition and the other metal.

Preferably, the temperature of the atomized jet deposition surface of said molten fluid is 300-500°C superheated relative to the melting point of said base metal; more preferably, the temperature of the atomized jet deposition surface of said molten fluid is 380-450°C superheated relative to the melting point of said base metal.

As a further improvement of the above scheme, in Step (3), said rolling or stamping is conducted at a temperature lower than the melting point of said base metal.

Preferably, when the bimetal is a copper-aluminum composite material, said rolling or stamping is conducted at the temperature of 400-550°C, and said rolling or stamping is conducted at a pressure of 50-500 MPa.

Specifically, the free deposition surface of the bimetallic material after spray deposition is not flat enough. For example, the density of the spray-deposited copper layer is generally about 98%, and the surface of the cladding layer can be made smooth, flat and dense by rolling or pressing. Rolling or pressing at a certain temperature and pressure can ensure sufficient process properties of the bimetal without destroying the metallurgical bonding of the bimetal. At the same time, precision forming of special cross-sections or shapes can be achieved through pressure processing.

As a further improvement of the above solution, in Step (2), said method further comprises a step of milling a surface of said base metal before spray deposition, and a tool mark depth of said milling is 0.1-5 mm.

Specifically, there are two main purposes for milling the surface of the base metal for mechanical processing. First, the milling machine is used to mill the surface to be clad of the base metal in clean conditions without adding the cutting fluid, so as to remove surface stains and more serious oxide skin; second, the surface to be clad of the base metal is made rough, and the depth of the milling tool marks is controlled to 0.1-5 mm. In this way, the rougher surface is more conducive to achieve metallurgical bonding on the cladding interface.

The second aspect of the present invention provides a bimetallic composite material.

Specifically, a bimetallic composite material comprising a base metal and a spray-deposited metal prepared by the preparation method stated in the first aspect of the present invention, wherein said spray-deposited metal has a melting point 1.2-2.0 times a melting point of said base metal; a interface between said base metal and said spray-deposited metal forms a metallurgical bonding.

The bimetallic composite material of the present invention is compounded by the base metal and the spray-deposited metal with different melting points. The compounded bimetals have an intact metallurgical bonding interface with excellent composite metal properties, such as electrical conductivity, thermal conductivity, heat dissipation, etc.

As a further improvement of the above solution, a shape of said bimetals is flat, cylindrical, tubular or special.

Specifically, the bimetallic composite material prepared using the spray deposition method of the present invention is applicable for not only flat shape, but also other shapes, such as cylindrical, tubular and even special-shaped.

The above technical solution of the present invention has at least the following technical effects or advantages compared to the prior art:
(1) When preparing the bimetallic composite material of the present invention, the spray-deposited metal with a high melting point is melted, atomized and spray-deposited onto the surface of the base metal with a lower melting point. The superheat of the molten liquid of the spray-deposited metal with a higher melting point, the thermal energy brought by the latent heat of crystallization, and the impact kinetic energy from the atomized jet jointly act on the base metal to achieve the metallurgical bonding of two metals. There is no need to preheat the base metal, which not only simplifies the process, but also reduces energy consumption and costs. The bimetallic composite material prepared by the present invention has an intact metallurgical bonding interface, which gives the composite metal material good electrical conductivity, thermal conductivity, heat dissipation, etc.
(2) The method for preparing the bimetallic composite material of the present invention is applied to the production of Al-Cu composite plates. The prepared Al-Cu composite plates have a ratio of conductive resistance low to 0.856, and also have good interfacial electrical conductivity.

### BRIEF DESCRIPTION OF DRAWINGS

Figure 1 shows the sawing section view of the Cu-Al composite plate billet prepared in Embodiment 1;
Figure 2 shows the polishing cross-section view of the Cu-Al composite plate prepared in Embodiment 1;
Figure 3 shows the metallographic microstructure in the jet state of the bonding layer of the Cu-Al composite plate prepared in Embodiment 1.

### DETAILED DESCRIPTION

The present invention is described in detail below in conjunction with embodiments, so as to facilitate the understanding of the invention by the personnel in the technical field to which it belongs. It is necessary to point out in particular here that the embodiments are only used for further description of the present invention, but cannot be understood as a limitation of the protection scope of the present invention. The non-essential improvements and adjustments made to the present invention by the personnel skilled in the art in the field shall remain within the protection scope of the present invention in accordance with the content of the above invention. Meanwhile, the raw materials mentioned below without detailed description are all commercially available products; the process steps or preparation methods not mentioned in detail are all process steps or preparation methods known to the personnel skilled in the art in the field.

### Embodiment 1

A method for preparing a pure copper-6063 aluminum alloy composite plate, comprising the following steps:
(1) Melting pure copper in an induction furnace lined with a graphite crucible furnace at a melting temperature of 1200°C to obtain a copper melt; then adding 0.2 wt% phosphor copper (15% P) for degassing and stirring to ensure melting and slagging-off of phosphor copper; then pressing in 0.02wt % magnesium metal using a bell for secondary deoxidation; finally, pouring the copper melt into the spray atomization system, with the atomized gas as nitrogen and the atomization pressure of 5 atm (505.63 kPa) the temperature of the deposition surface of the copper liquid atomized jet was 434°C superheated relative to the melting point of the base material, and the melting point of the spray-deposited metal was1.67 times the melting point of the base metal.
(2) First, milling and machining the surface of the 6063 aluminum alloy substrate plate (25mm thick, 350mm wide and 2000mm long), that is, milling the surface to be clad of 6063 aluminum alloy substrate plate without cutting fluid to remove the surface stain and serious oxide skin. At the same time, controlling the depth of milling marks at 0.5mm, and the treated 6063 aluminum alloy substrate plate was obtained; it was then placed on the feeding end in the spraying chamber under nitrogen protection; and sent by a drive mechanism to the spray jet in Step (1) to start spraying, with the atomized jet velocity of 280 m/s and the spray distance of 500 mm; wherein: the copper liquid jet makes a lateral reciprocal oscillation relative to the moving direction of the 6063 aluminum alloy substrate plate through a nozzle oscillation mechanism with adjustable amplitude, thus making the copper liquid jet deposit uniformly on the 6063 aluminum alloy substrate plate and achieving metallurgical bonding; at the same time, the feeding speed of the 6063 aluminum alloy substrate plate was adjustable, and could be adjusted according to the detected thickness of the spray cladding.
(3) The 6063 aluminum alloy substrate plate to be spray-deposited was sent to the spray jet of copper liquid in succession by an auxiliary mechanism for continuous production. The bimetallic plate after spray deposition was sent to the other end of the spraying chamber (under nitrogen protection) and stopped. However, the plate did not exit the spraying chamber until the whole furnace of copper liquid was sprayed, but was under nitrogen protection to prevent oxidation. The bimetallic plate exited the spraying chamber after being cooled down, and was cut to the appropriate size to obtain a Cu-Al composite plate billet.
(4) Putting the Cu-Al composite plate billet prepared in Step (3) into the online heating furnace under nitrogen protection, adjusting the temperature of the heating furnace to 550°C, performing stamping under the pressure of 100 MPa, and the Cu-Al composite plate of this embodiment was obtained.

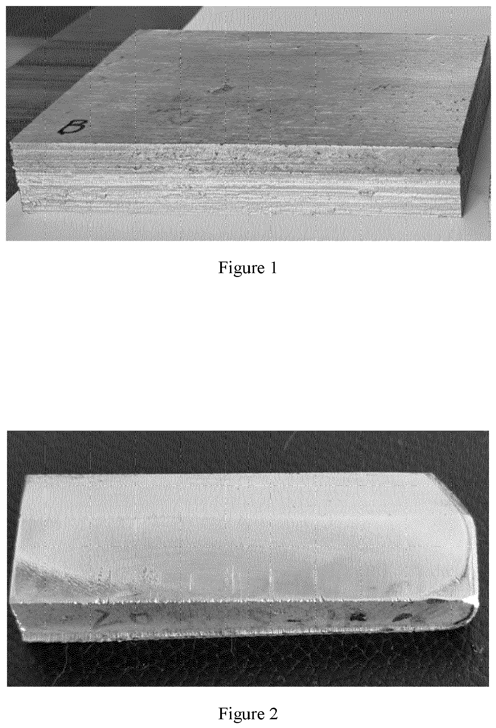

Figure 1 shows the sawing section view and polishing cross-section view of the Cu-Al composite plate billet prepared in Embodiment 1, with dimensions of 24 mm (Al) + 16 mm (Cu) thick, 100 mm wide and 150 mm long. As can be seen from Figure 1, the cross-section of the Cu-Al composite plate billet after spray deposition shows intact metallurgical bonding.

Figure 2 shows the polishing cross-section view of the Cu-Al composite plate prepared in Embodiment 1. As can be seen from Figure 2, the density of the Cu-Al composite plate after pressing is substantially improved relative to that in Figure 1.

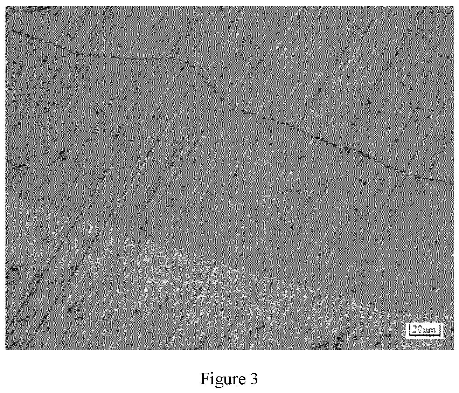

Figure 3 shows the metallographic microstructure in the jet state of the bonding layer of the Cu-Al composite plate prepared in Embodiment 1, with 6063 aluminum alloy in the lower left, pure copper in the upper right, and transitional organization in the middle. As can be seen from Figure 3, the Cu-Al interface of the Cu-Al composite plate prepared by the present invention has achieved metallurgical bonding.

### Embodiment 2

A method for preparing a chrome-zirconium copper and 7055 aluminum alloy composite plate, comprising the following steps:
(1) Melting the chrome-zirconium copper alloy in an induction furnace lined with a MgO-based crucible at a melting temperature of 1190°C to obtain a copper alloy liquid; then adding copper-magnesium master alloy for deoxidation, and deslag; finally, pouring the copper alloy melt into the spray atomization system, with the atomized gas as nitrogen and the atomization pressure of 6 atm (607.95 kPa); the temperature of the atomized jet deposition surface of the copper liquid was 448°C superheated relative to the melting point of the base material, and the melting point of the deposited metal was 1.71 times the melting point of the base metal.
(2) First, milling and machining the surface of the 7055 aluminum alloy substrate plate (25mm thick, 350mm wide and 2000mm long), that is, milling the surface to be clad of 7055 aluminum alloy substrate plate without cutting fluid to remove the surface stain and oxide skin. At the same time, controlling the depth of milling marks at 1mm, and the treated 7055 aluminum alloy substrate plate was obtained; it was then placed on the feeding end in the spraying chamber under nitrogen protection; and sent by a drive mechanism to the spray jet in Step (1) to start spraying, with the atomized jet velocity of 250 m/s and the spray distance of 550 mm; wherein: the copper alloy liquid jet makes a lateral reciprocal oscillation relative to the moving direction of the 7055 aluminum alloy substrate plate through a nozzle oscillation mechanism with adjustable amplitude, thus making the copper liquid jet deposit uniformly on the 7055 aluminum alloy substrate plate and achieving metallurgical bonding; at the same time, the feeding speed of the 7055 aluminum alloy substrate plate was adjustable, and could be adjusted according to the detected thickness of the spray cladding.
(3) The 7055 aluminum alloy substrate plate to be spray-deposited was sent to the spray jet of copper liquid in succession by an auxiliary mechanism for continuous production. The bimetallic plate after spray deposition was sent to the other end of the spraying chamber (under nitrogen protection) and stopped. However, the plate did not exit the spraying chamber until the whole furnace of copper alloy liquid was sprayed, but was under nitrogen protection to prevent oxidation. The bimetallic plate exited the spraying chamber after being cooled down, and was cut to the appropriate size to obtain a Cu-Al composite plate billet;
(4) Putting the Cu-Al composite plate billet prepared in Step (3) into the online heating furnace under nitrogen protection, adjusting the temperature of the heating furnace to 580°C, performing stamping under the pressure of 100 MPa, and the Cu-Al composite plate of this embodiment was obtained.

### Embodiment 3

A method for preparing a high-strength steel H13-chrome-zirconium copper alloy composite plate, comprising the following steps:
(1) Melting the high-strength steel H13 in an induction furnace at a melting temperature of 1605°C to obtain the molten steel; then adding 0.15wt% FeSi75 for degassing and deslagging; finally, pouring the molten steel into the spray atomization system, with the atomized gas as nitrogen and the atomization pressure of 9 atm (911.93 kPa); the temperature of the atomized jet deposition surface of the molten steel is 398 °C superheated relative to the melting point of the base material was 398°C, and the melting point of the deposited metal was 1.37 times the melting point of the base metal.
(2) First, milling and machining the surface of the chrome-zirconium copper alloy substrate plate (25 mm thick, 350 mm wide and 2000 mm long), that is, milling the surface to be clad of the copper substrate plate without cutting fluid to remove the surface stain and serious oxide skin. At the same time, controlling the depth of milling marks at 1.5 mm, and the treated chrome-zirconium copper alloy substrate plate was obtained; it was then placed on the feeding end in the spraying chamber under nitrogen protection; and sent by a drive mechanism to the spray jet in Step (1) to start spraying, with the atomized jet velocity of 280 m/s and the spray distance of 550 mm; wherein: the molten steel jet makes a lateral reciprocal oscillation relative to the moving direction of the chrome-zirconium copper alloy substrate plate through a nozzle oscillation mechanism with adjustable amplitude, thus making the molten steel jet deposit uniformly on the chrome-zirconium copper alloy substrate plate and achieving metallurgical bonding; at the same time, the feeding speed of the chrome-zirconium copper alloy substrate plate was adjustable, and could be adjusted according to the detected thickness of the spray cladding.
(3) The chrome-zirconium copper alloy substrate plate to be spray-deposited was sent to the spray jet of molten steel in succession by an auxiliary mechanism for continuous production. The bimetallic plate after spray deposition was sent to the other end of the spraying chamber (under nitrogen protection) and stopped. However, the plate did not exit the spraying chamber until the whole furnace of copper liquid was sprayed, but was under nitrogen protection to prevent oxidation. The bimetallic plate exited the spraying chamber after being cooled down, and was cut to the appropriate size to obtain a high-strength steel H13-chrome-zirconium copper alloy composite plate billet.
(4) Putting the H13-chrome-zirconium copper alloy composite plate billet prepared in Step (3) into the online heating furnace under nitrogen protection, adjusting the temperature of the heating furnace to 900°C, performing stamping under the pressure of 150 MPa, and the H13-chrome-zirconium copper alloy composite plate of this embodiment was obtained.

### Comparative Example 1

Commercially available Cu-Al composite plate, model: 25 x 100 x 150 mm, the composite plate was made of 6063 aluminum alloy and pure copper through explosive forming, with dimensions of 15 mm (Al) + 10 mm (Cu) thick, 100 mm wide and 150 mm long.

### Performance test

The Cu-Al composite plate prepared in Embodiment 1 and the Cu-Al composite plate in Comparative Example 1 were cut into the test samples with same dimensions of 9mm (Al) + 7mm (Cu) thick, 60mm wide and 73mm long, and the interfacial conductive resistance of the two composite plates was tested under the test current of 100A. The test results are shown in Table 1.

**Table 1: Comparison of the interfacial conductive resistance of Cu-Al composite plates in Embodiment 1 and Comparative Example 1**

| Test sample | Al-Al (µΩ) | Cu-Al (µΩ) | Rate X |
|---|---|---|---|
| Embodiment 1 | 3.67 | 3.14 | 0.856 |
| Comparative Example 1 | 3.72 | 3.30 | 0.888 |

The ratio X = (Cu-Al, [µΩ)/(Al-Al, µΩ) in Table 1. The smaller the value of X, the smaller the resistance of the Cu-Al interface. As can be seen from Table 1, the interfacial electrical conductivity of the Cu-Al composite plate prepared using the spray deposition method of the present invention is significantly better than that of the Cu-Al composite plate prepared through conventional explosive forming.

For the ordinary technicians in the technical field to which the invention belongs, several simple derivations or substitutions can be made under the premise of not separating the concept of the present invention, without the need for creative labor. Therefore, all simple improvements made to the present invention by the technicians in the technical field in accordance with the disclosure of the present invention should be within the protection scope of the present invention. The above embodiments are preferred embodiments of the present invention, and any processes similar to and equivalent changes made to the present invention shall be within the protection scope of the present invention.

## Claims

1. A method for preparing a bimetallic composite material comprising a base metal and a spray-deposited metal, wherein said spray-deposited metal has a melting point 1.1-2.0 times a melting point of said base metal, and said method comprises the following steps:
(1) Metal melting: melting said spray-deposited metal to obtain a molten liquid;
(2) Spray deposition: atomizing said molten liquid, and then spray-depositing onto a surface of said base metal under inert gas protection to obtain a composite metal billet; and
(3) Press processing: rolling or stamping said composite metal billet to obtain said bimetallic composite material.

2. The method for preparing the bimetallic composite material according to claim 1, **characterized in that**: in Step (2), an atomized jet velocity of said molten liquid is 20-300 m/s.

3. The method for preparing the bimetallic composite material according to claim 1, **characterized in that**: said spray-deposited metal is any one selected from the group consisting of steel, cast iron, titanium and its alloys, and copper and its alloys; said base metal is any one selected from the group consisting of alloy steel, cast iron, copper and its alloys, aluminum and its alloys, lead and tin alloys.

4. The method for preparing the bimetallic composite material according to claim 1, **characterized in that**: in Step (2), a distance of said spray is 300-1000mm.

5. The method for preparing the bimetallic composite material according to claim 1, **characterized in that**: in Step (2), said inert gas is nitrogen or argon; said atomization is conducted at a pressure of 3-10 atm (303.98 to 1013,25 kPa).

6. The method for preparing the bimetallic composite material according to claim 1, **characterized in that**: in Step (2), a temperature of an atomized jet deposition surface of said molten liquid is 100-600°C superheated relative to the melting point of said base metal.

7. The method for preparing the bimetallic composite material according to claim 1, **characterized in that**: in Step (3), said rolling or stamping is conducted at a temperature lower than the melting point of said base metal.

8. The method for preparing the bimetallic composite material according to claim 1, **characterized in that**: in Step (2), said method further comprises a step of milling a surface of said base metal before spray deposition, and a tool mark depth of said milling is 0.1-5 mm.

9. A bimetallic composite material comprising a base metal and a spray-deposited metal prepared by the method according to any of claims 1 to 8, wherein said spray-deposited metal has a melting point 1.1-2.0 times a melting point of said base metal; a interface between said base metal and said spray-deposited metal forms a metallurgical bonding.

10. The bimetallic composite material according to claim 9, **characterized in that**: a shape of said bimetallic composite material is flat, cylindrical, tubular or special.
